# EUROPEAN PATENT APPLICATION

(11) **EP 4 804 121 A1**
(43) Date of publication of application: **09.09.2026**
(21) Application number: 26161674.2
(22) Date of filing: 02.03.2026
(51) Int. Cl.: G06T 7/13

(54) **GENERALIZED EDGE DETECTION IN MEDICAL IMAGING**

(30) Priority: 04.03.2025 US 202519069602
(71) Applicant: Siemens Healthineers AG, 91301 Forchheim (DE)
(72) Inventor: HOLBROOK, Matthew, Princeton, NJ, 08540-6632 (US); ALLMENDINGER, Thomas, 91301 Forchheim (DE); RAUPACH, Rainer, 91301 Forchheim (DE)
(74) Representative: HKW Intellectual Property PartG mbB

(57) **Abstract**

For edge detection, metadata about the acquisition and/or reconstruction of medical image data is used in the detection of the edges. A machine-learned model includes inputs for both the metadata and the image data. The metadata is used to condition the part of the machine-learned model applied to the image data for edge detection. As a result of conditioning the machine-learned model based on metadata, the machine-learned model is better able to handle a variety of imaging cases, such as different acquisition, reconstruction, and/or anatomy.

## Description

### BACKGROUND

The present embodiments relate to edge detection in medical imaging. Edge detection may help with feature detection and extraction to guide follow-up processing, such as using edges for reconstruction of images with enhanced edges for better visibility or segmentation of important features. Edge detection becomes non-trivial when the image is affected by noise, especially structured noise, or when edges are low contrast, such as occurs in medical imaging. Edge detection may not be robust to variation in noise, acquisition, and/or reconstruction. This sensitivity is especially apparent in medical imaging where image texture and noise can vary greatly depending on acquisition parameters. Failed edge detection due to these characteristics results in missed or incomplete edges, hampering downstream processing. Thus, edge detection is tuned for particular imaging, resulting in loss of generalizability.

Common solutions are to apply denoising algorithms to the image to first reduce noise before applying the edge detection algorithm. This adds the risk of losing edges during denoising and adds complexity and computational cost.

Deep learning (DL) methods avoid the hand-crafted nature of traditional edge detection algorithms and often provide enhanced performance, such as providing richer edge maps. Even among DL detectors, choice architecture and training data may have a large effect on performance when tested on a wide variety of test images. The solution in medicine is to limit the application to narrow use cases, resulting in loss of generalizability.

### SUMMARY

Systems, methods, and non-transitory computer readable media with instructions are provided for edge detection. Metadata about the acquisition and/or reconstruction of medical image data is used in the detection of the edges. A machine-learned model includes inputs for both the metadata and the image data. The metadata is used to condition the part of the machine-learned model applied to the image data for edge detection. As a result of conditioning the machine-learned model based on metadata, the machine-learned model is better able to handle a variety of imaging cases, such as different acquisition, reconstruction, and/or anatomy.

In a first aspect, a method is provided for edge detection by a medical imager. Metadata for imaging data representing a patient is identified. An edge represented in the imaging data is detected with a machine-learned network. The machine-learned network outputs the edge in response to input of the metadata and the imaging data. The machine-learned network includes a hypernetwork and a neural network. The hypernetwork is configured to encode the metadata for altering operation of the neural network. An image representing the edge is output.

In a second aspect, a method is provided for edge detection by a medical imager. Both metadata and image data are input to a machine-learned network. The machine-learned network includes a first part operating on the image data and a second part operating on the metadata. The second part is configured to condition the first part. The edge detected by the machine-learned network in response to the input of both the metadata and image data is output.

In a third aspect, a system is provided for edge detection. A medical scanner is configured to scan a patient. The scan provides scan data and metadata. The metadata represents the scan, and the scan data represents the patient. An image processor is configured to detect the edge by application of the scan data and the metadata to a machine-learned model. The machine-learned model outputs the edge. A display is configured to display an image responsive to the edge.

Any one or more of the aspects or concepts summarized above or in the Illustrative Embodiments below may be used alone or in combination. The aspects or concepts described for one Illustrative Embodiment or aspect may be used in other embodiments or aspects. The aspects or concepts described for a method or system may be used in others of a system, method, or non-transitory computer readable storage medium. Any one or more of the aspects described above may be used alone or in combination.

These and other aspects, features, and advantages will become apparent from the following detailed description of preferred embodiments, which is to be read in connection with the accompanying drawings. The present invention is defined by the following claims, and nothing in this section should be taken as a limitation on those claims. Further aspects and advantages of the invention are discussed below in conjunction with the preferred embodiments and may be later claimed independently or in combination.

### BRIEF DESCRIPTION OF THE DRAWINGS

The components and the figures are not necessarily to scale, emphasis instead being placed upon illustrating the principles of the embodiments. Moreover, in the figures, like reference numerals designate corresponding parts throughout the different views.
Figure 1 is a flow chart of one embodiment of a method for edge detection by a medical imager;
Figure 2 illustrates one embodiment of an architecture for incorporation of metadata as an input to a machine-learned network for edge detection;
Figures 3 illustrates use of encoded metadata within a machine-learned network for edge detection; and

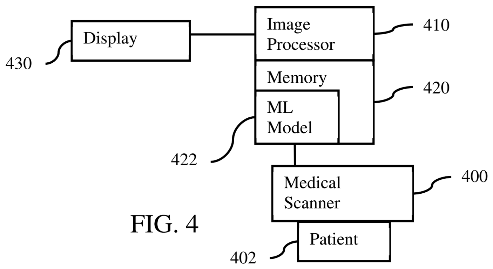

Figure 4 is a block diagram of one embodiment of a system for edge detection in medical imaging.

### DETAILED DESCRIPTION OF EMBODIMENTS

A generalizable DL solution is provided for edge detection using metadata. Training data with a wide range of imaging parameters, acquisition and/or reconstruction, is collected and/or created. Some or all the parameters that effect or contribute to image quality are stored as metadata with the images and used in training the edge detection algorithm. The DL architecture is configured to receive the original image along with this metadata. Based on the architecture, the metadata is used to condition the network to a particular image type. By training on a wide variety of images, this network as trained is robust across this range and more able to cope with changes. By allowing the metadata to guide inference, the network is not expected to identify and treat images with different characteristics on its own. The DL solution is generalized to various anatomy, acquisition settings, and/or reconstruction settings. The resulting estimated edges are more likely accurate despite the variation in input images.

This solution centers around using metadata to condition the edge detection. A more generalizable solution is provided for the edge detection problem in medical imaging. The speed of the solution depends on the complexity of the architecture used, but modern DL architectures are fast or efficient in computation.

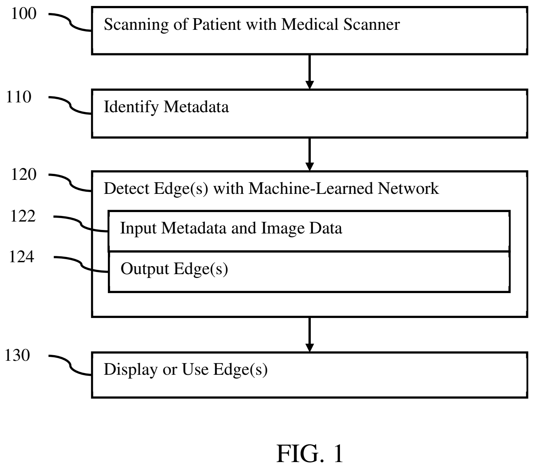

Figure 1 shows one embodiment of a method for edge detection by a medical imager. The edge detection is provided by a machine-learned model, such as a DL network, which operates on both imaging data and metadata. For example, the machine-learned model includes a control part that receives metadata and conditions another part that operates on the imaging data.

The method is implemented by a medical imager (e.g., medical scanner) to scan a patient in act 100. An image processor, such as part of the medical scanner, server, computer, or workstation, performs acts 110-130. The image processor, using a communications interface or memory, identifies the metadata in act 110. The image processor detects the edge or edges in act 120 or acts 122 and 124. The image processor uses the detected edge, such as for image processing, and/or displays an image of the edge using a display screen in act 130. Other devices may be used.

The method is performed in the order shown (top-to-bottom or numerical). Other orders may be used. For example, act 110 is performed before act 100.

Additional, different, or fewer acts may be provided. For example, acts 100, 122, 124, and/or 130 are not provided. As another example, acts for positioning the patient, configuring the imager, and/or assisting user diagnosis, tracing, and/or treatment planning are provided.

The examples used herein are for computed tomography (CT) imaging of a patient. In other embodiments, other types of imagers or scanners are used instead of CT, such as a magnetic resonance (MR) or ultrasound imager. The method may be for specific anatomy, such as the lungs. The generalization is for different acquisition and/or reconstruction parameter values for the given type of imager and anatomy. Other tissue, organs, anatomy, or regions of the patient may be used. For further generalization, the method is used for different anatomy, acquisition parameter values, and/or reconstruction values for a same type of imager. In even further generalization, the method is used for different types of imagers as well.

In act 100, the medical scanner scans a patient. The patient is positioned relative to the scanner. For example, the patient is positioned in the bore of the CT scanner. The gantry rotates an x-ray source and detector in a pattern around the patient. The detector measures the intensity of x-rays passing through the patient. The detected x-rays are reconstructed into a representation of the patient.

Various parameters or settings may be used in scanning the patient. A CT example is used below, but MR or ultrasound have their own parameters. For acquisition, the intensity or dose (e.g., energy and exposure) of the x-rays may be controlled. For acquisition, the geometry of the scan is controlled. For reconstruction, different kernels, regularization strength, reconstruction algorithms, and/or other reconstruction parameters are used. The reconstruction results in imaging data with particular geometry, such as in-plane and through plane resolutions. Any acquisition parameters and/or reconstruction parameters may be used. The parameters are variables or settings used to scan the patient, including acquisition and/or reconstruction.

The scan is performed using a particular imager or type of imager (e.g., manufacturer and model) configured pursuant to a scan protocol. The user configures the imager. Alternatively, automated or default configuration is provided.

The scan is a volume scan, such as measuring for locations distributed along three dimensions. In alternative embodiments, a planar scan is performed. The scan results in scan data. The scan data is formatted in a scan domain or reconstructed into an image or object domain. The imaging data is scan data from along any part of the processing or scan process, such as detected data, reconstructed data, and/or data formatted for display on a display screen. The scan data and corresponding imaging data represent the patient in any format.

The scan configuration may result in given field of view, voxel or pixel size, or other information. The scanner may have selectable hardware as part of the scan configuration. The scan configuration and/or scanner may result in imaging data having particular characteristics, such as noise level, contrast, sharpness, and/or resolution. The scan configuration may be associated with patient information, such as patient demographics. The characteristics of the scan, scanner, and/or patient are provided as metadata. Alternatively, or additionally, the values of the parameters are provided as the metadata.

In act 110, the image processor identifies metadata for the scan or protocol used to acquire the imaging data representing a patient. The image processor identifies by loading, mining, searching for, and/or receiving configuration information for the scan of the patient. The values of the parameters are stored with the image (image data). For example, the imaging data is stored using the DICOM format. The metadata is stored in DICOM tags (e.g., headers). As another example, the scanner logs the configuration information, so the image processor looks-up the configuration. In yet another example, a value or values for the scanner and/or tissue are known or recorded, such as the noise level for the scanner. In another example, demographics or other scan settings for the patient are looked-up from a patient computerized medical record. The setting(s) (value) used for acquisition of the imaging data, the setting(s) used for reconstruction of the imaging data, and/or the setting(s) or other information for other characteristics of the anatomy, scanner, or patient are identified.

The value or values of one or more settings, image characteristics, and/or scanner information are identified. For example, the dose as energy and/or exposure, geometry as in-plane and/or through-plane resolution, and/or the reconstruction kernel and/or regularization (e.g., ADMIRE or SAPHIRE) strength are identified. Anatomy, scanner, image characteristics, and/or other parameters or characteristics may be identified as metadata.

Rather than determining all the metadata, the value or values for a sub-set of the parameters (e.g., reconstruction and/or acquisition) for scanning the patient are found. The most important with respect to the final image quality of the parameters (i.e., the parameters with the strongest effect of interest) used in the scan are identified.

In act 120, the image processor detects an edge or edges represented in the imaging data. The imaging data is in a scan format or a display format. The imaging data may represent different locations in the patient, such as pixel locations in a plane or voxel locations in a volume.

The edge detection identifies a sub-set of the locations represented by the imaging data. The locations are associated with edges in anatomy and/or objects (e.g., tissue, organ, lesion, tumor, cyst, or device). For example, the edges for the outer border and/or any folds in the lungs are detected in two dimensions or three dimensions. The edges for passageways or airways may be detected.

The edge detection is performed with a machine-learned model, such as a machine-learned neural network. The machine-learned model may be any now known or later develop machine-trained model, such as a Bayesian network or a support vector machine. In one embodiment, the machine-learned model is a neural network trained with DL.

The model architecture is arranged to receive the original image (image data) along with the metadata. The metadata is used to condition the network to a particular image type. The network is pre-configured based on the metadata, then the image data is processed as configured. By training on a wide variety of images, this network is trained for robustness across this range and more able to cope with changes by allowing the metadata to guide inference rather than expecting the network to identify and treat images with different characteristics on its own.

Acts 122 and 124 are for application of the machine-learned model, where data is input to the model in act 122, which generates output in act 124. For adapting to different imaging data or situations (e.g., different imaging configurations), the input of act 122 to the machine-learned network includes both metadata and image data. The machine-learned network uses the metadata for the detection of edges represented in the image data, allowing for the same network as trained to detect for different acquisition parameter settings, reconstruction parameter settings, anatomy of interest, scanner characteristics, image data characteristics, and/or patient characteristics. The machine-learned network outputs the edge or edges in act 124 in response to the input of act 122, providing the detection of edges in act 120. Additional, different, or fewer application acts may be provided for the detection of act 120.

The machine-learned network is configured to output the edge(s) in response to input of the metadata and the imaging data. Any architecture may be used. For example, a mixed block as disclosed in U.S. Patent No. 11,288,806, is used. For more generalization and/or computing efficiency, the machine-learned network is arranged as a controller (e.g., hypernetwork) that conditions or controls operation of the neural network operating on the imaging data. The controller is configured to encode the metadata for altering operation of the neural network. The operation, values, or other characteristics of the neural network for edge detection change based on the metadata.

The machine-learned network is a fully connected, convolutional, or another neural network. Any network structure may be used. Any number of layers, nodes within layers, types of nodes (activations), types of layers, interconnections, learnable parameters, and/or other network architectures may be used. In one approach, the neural network is configured as an image-to-image network, such as an encoder-decoder or U-Net. The image-to-image network is altered to receive input of the metadata as itself or encodings derived from the metadata.

Machine training uses the defined architecture, training data, and optimization to learn values of learnable parameters of the architecture based on the samples and ground truth of training data. For training the model to be applied as a machine-learned model, training data is acquired and stored in a database or memory. The training data is acquired by aggregation, mining, loading from a publicly or privately formed collection, transfer, and/or access, such as collecting from patient medical records. Ten, hundreds, or thousands of samples of training data are acquired. The samples are from scans of different patients and/or phantoms. Simulation may be used to form the training data. The training data includes many samples of the desired output (ground truth), such as edges, and the input, such as metadata and imaging data.

A machine (e.g., image processor, server, workstation, or computer) machine trains the neural network to detect edges. The training uses the training data to learn values for the learnable parameters (e.g., convolution kernels, node weights, link weights, and/or settings of activation functions) of the network. The training determines the values of the learnable parameters of the network that most consistently output close to or at the ground truth given the input samples. In training, the loss function may be the L1 between prediction edges and ground truth edges. Other loss functions, such as cross entropy or L2, may be used. Adam or another function is used for optimization.

Once trained, the machine-learned or trained neural network is stored for later application. The training determines the values of the learnable parameters of the network. The network architecture, values of non-learnable parameters, and values of the learnable parameters are stored as the machine-learned network. Copies may be distributed, such as to CT scanners, for application. Once stored, the machine-learned network may be fixed. The same machine-learned network may be applied to different patients, different scanners, and/or with different imaging protocols for the scanning.

The machine-learned network may be updated. As additional training data is acquired, such as through application of the network for patients and corrections by experts to that output, the additional training data may be used to re-train or update the training.

The machine-learned network, as trained, has an architecture designed for accepting metadata. The metadata includes categorical (e.g., body region, scanner version, and/or reconstruction kernel), scalar or continuous values. The metadata may be converted to continuous values via normalization or the hypernetwork. In act 122, both metadata and image data are input by the image processor to the machine-learned network. The machine-learned network has a first part operating on the image data and a second part operating on the metadata. The second part is configured to condition the first part.

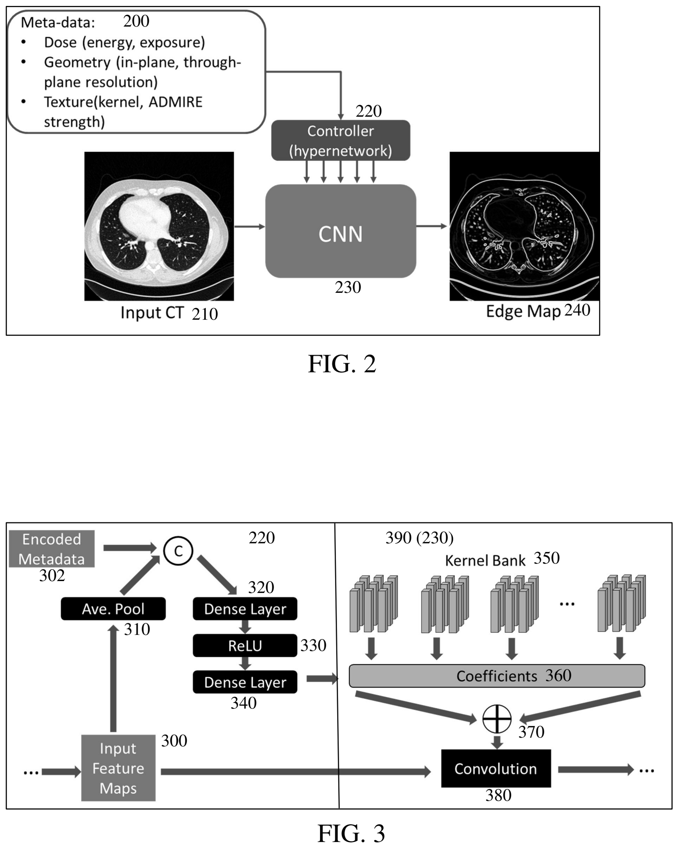

Figure 2 shows an example. The metadata 200 includes dose (e.g., energy and exposure), geometry (e.g., in-plane and through-plane resolutions) and texture for reconstruction (e.g., reconstruction filtering kernel and/or regularization strength (ADMIRE regularization in this example)). The metadata 200 is provided to the controller 220 as dose, resolution, and reconstruction values used for acquiring the input CT imaging data 210 (represented as a planar image in this example).

The controller 220 is a process for converting the metadata into one or more controls of the neural network. In one approach, the controller 220 is itself a neural network, such as an encoder forming the hypernetwork. The controller 220 encodes the metadata, providing the encoded information to the convolutional neural network 230. In training, the learnable parameters of the hypernetwork are learned with the learning of the parameters of the convolutional neural network 230. The controller 220 outputs one or more values for conditioning the convolutional neural network 230 based on the metadata 200.

The neural network is a convolutional neural network 230, but a fully connected or other architecture may be used. The convolutional neural network 230 is configured to receive the imaging data 210 at an input and output the edge or edges. The imaging data 210 is from the scan or features derived from the scan or representation of the patient.

This example in Figure 2 shows one way in which the metadata 200 is used to tailor the convolutional neural network 230 to treat images with different parameters. In this example, CT parameters (metadata 200) which have a high impact on image quality such as dose, resolution, and reconstruction kernel are passed into the controller (e.g., control network or hypernetwork) 220, which encodes these values. The metadata and the controller 220 are used to guide the convolutional neural network 230. Selected metadata helps the network adapt it's processing for different image characteristics (e.g., noise, sharpness, resolution, ...).

In the approach shown in Figure 2, the controller (e.g., hypernetwork) 220 is configured to provide values to different layers of the convolutional neural network 230 in parallel. Different values to condition different layers of the convolutional neural network 230 are output to the different layers. Unique values for conditioning the different parts are provided. The metadata-based values are passed to multiple points in the convolutional neural network 230, where the metadata-based values may affect processing of the imaging data 210 for edge detection in one or more of a variety of ways. Due to the arrangement, the controller 220 passes the values to different points in the convolutional neural network 230 in parallel (along separate paths to the separate parts of the convolutional neural network 230) rather than sequentially through the network (i.e., rather than in parallel to the processing of the image data features).

The encoded metadata values condition the convolutional neural network. The learned or other values of the convolutional neural network are biased, weighted, altered, selected, or otherwise set based on the metadata values (control by the controller 220). For example, the metadata values set attention mechanisms, feature scaling, and/or the selection of processing kernels. The controller 220 generates an attention map, scale, kernel configuration, and/or other values for different parts of the convolutional neural network 230 prior to processing the image data by the parts. These encoded metadata values are passed to multiple points in the network 230, where the values affect processing in a variety of ways, including attention mechanisms, feature scaling, and selection of processing kernels.

The attention mechanism may focus the convolutional neural network 230 on particular areas or volumes. By providing an attention map or other spatial labeling, the metadata values establish where the convolutional neural network 230 is to focus.

For scaling, any of the values (e.g., nodes, links, activation functions, or other) is weighted or biased. Features used by or output by one or more layers or nodes may be weighted based on the metadata values. The values of the learned parameters may be weighted based on the metadata values.

The convolutional neural network 230 may be a dynamic convolutional neural network. The input imaging data 210 or features derived therefrom may be analyzed to create a kernel from a kernel bank to use for convolution. The creation may be by combination and/or selection. In addition, or instead, the metadata values are used to create the kernel. The encoded metadata values from the controller (hypernetwork) 220 are kernel creation information. The creation information or kernel configuration value may be weights used in the dynamic kernel creation. The weight or weights are used by the dynamic convolutional network to form the kernel for convolution with the image data or features derived therefrom.

Figure 3 shows an example. In this example, the convolution of one layer or node of the convolutional neural network 230 (dynamic convolutional network 390) is shown. Other convolution nodes or layers may have the same structure. Other nodes or layers may instead have no control by the controller 220 or be controlled by scale and/or attention mechanisms.

The kernel is formed based on the image data or features derived therefrom (feature maps) 300 and the encoded metadata values 302. The encoded metadata values 302 may instead be the metadata prior to any encoding. The encoded metadata values 302 and the feature maps 300 are provided to the controller 220. An average pooling layer 310 converts the feature maps 300 to a vector. The encoded metadata values 302 are concatenated with the vector. The concatenated information is input to a network. In this example, the network includes a dense layer 320, ReLU layer 330, and another dense layer 340. Additional, different, and/or fewer layers may form the network. The output of the last layer 340 of the controller 220 are the weights. The weights are based on both the encoded metadata values 302 and the feature maps 300 of the input vector.

The dynamic convolutional network 390 uses the weights to create the kernel. A kernel bank 350 includes kernel options learned during training. The weights are used as coefficients 360 for selecting or biasing contribution to the kernel from the kernel bank 230. The resulting kernel information is combined 370 into the kernel. The kernel is then convolved 380 with the input feature maps.

Incoming metadata 302 is combined with compressed features maps 300 to weight the influence of each in a learned bank 350 of kernels. This kernel creation, based, in part, on metadata, may occur at any number of points within the architecture of the convolutional neural network 230. The metadata modifies the performance of the convolution kernels. Metadata and feature maps are used to weight the impact of a bank 350 of learned kernels.

Returning to Figure 1, for application of a previously trained machine-learned network or other model, the previously unseen imaging and metadata are input in act 122 for the detection of act 120. The metadata and image data or information derived from the data is input to the overall network or machine-learned model or network. The controller 220 receives the metadata for conditioning the part of the model or network (e.g., the convolutional neural network) that operates on the image data. The machine-learned network outputs in act 124 an edge in response to the input of both the metadata and the image data. Due to use of the metadata to condition the part of the network operating on the image data, edges may be accurately detected over a range of anatomy, acquisition settings, reconstruction settings, and/or other settings or characteristics.

Figure 2 shows an example edge output by the machine-learned model. The edge is part of or is the edge map 240. In this example, a cross-section of the lungs of a patient is shown. Edges are also provided for other anatomy, such as the chest wall. The outer boundary of the lungs and folds and/or bronchi of the lungs are also shown as edges. Rather than a segmentation showing all the locations in the image belonging to the lungs as a mask or texture, just the edges or boundaries are estimated for edge detection. Edges for additional or different anatomy may be estimated. Edges as three-dimensional surfaces may be estimated.

In act 130, the image processor generates and a display displays an image representing the edge. The image may be of the edges, such as displaying the edge map 240. Alternatively, the edges are used to enhance an image of the tissue or patient, such as emphasizing the edge regions in a CT image. The edge may be used to help with feature detection and extraction to guide follow-up processing. The image resulting from the follow-up processing is displayed. The edge may be used in reconstruction for improved visibility or segmentation. While the edge may not be separately displayed, the image of the patient tissue includes information enhanced using the edge in image processing.

The image may be a two-dimensional or planar slice. Alternatively, three-dimensional (3D) rendering (e.g., volume rendering) is performed to provide a two-dimensional image for display based on the 3D edges.

In another approach for act 130, the image processor outputs the image representing the edge, such as the edge map 240. The output is to memory, over a computer network, or to another process rather than to the display.

Figure 5 is a block diagram of a medical imaging system for edge detection. The system is for application of a machine-learned model 422 and/or for training of the machine-learned model 422. The machine-learned model 422 operates on input of both metadata and image data to detect an edge represented in the image data.

The medical imaging system implements the method of Figure 1 or another method. The machine-learned model 422 has an architecture shown in Figure 2 or Figure 3, or another architecture for edge detection based on metadata and scan data.

The medical imaging system includes the display 430, memory 420, and image processor 410. The display 430, image processor 410, and memory 420 may be part of the medical scanner 400, a computer, server, or another system for image processing to segment. A workstation or computer without the medical scanner 400 may be used as the medical imaging system. Additional, different, or fewer components may be provided, such as including a computer network for communication.

The medical scanner 400 is a medical diagnostic imaging system configured to scan an area or volume of a patient. The scan provides scan data, such as raw or detected signals. The scan data is image data. The image data is scan data at any stage of processing, including raw scan data or data formatted for display the display 430. The scan provides metadata. The values of the acquisition, reconstruction, or other parameters used in scanning the patient are recorded or obtained. Metadata as characteristics of the scanner (e.g., model) and/or the patient may be provided. The metadata represents the scan, and the scan data represents the patient.

The medical scanner 400 is a CT, MR, ultrasound, or another patient scanner (e.g., positron emission tomography or single photon emission computed tomography). Energy is transmitted into the patient. A detector detects the response. Alternatively, emissions from the patient are detected.

Different settings may be used to obtain the scan data. The various types of medical scanners 400 have corresponding parameters that may be set to scanning a patient. For example, the dose, gantry motion, pulse repetition frequency, energy, exposure, and/or other acquisition parameters for CT are used. As another example, the type of reconstruction, stop criterion, regularization strength, kernel, and/or other reconstruction parameters for CT are used. In yet another example, a characteristic resulting from the acquisition and/or reconstruction parameters may be used, such as geometry of the object representation (e.g., resolution). Characteristics of the medical scanner 400 or the scan of the patient, such as noise level, may be included or used as the metadata. Any metadata for a scan of the patient 402 is provided. Different settings (values of parameters) may be used for different patients and/or different scans.

The image processor 410 is a control processor, general processor, digital signal processor, three-dimensional data processor, graphics processing unit, application specific integrated circuit, field programmable gate array, artificial intelligence processor, digital circuit, analog circuit, tensor processor, combinations thereof, or another now known or later developed device for applying the machine-learned model 422 and/or edge detection. The image processor 410 is a single device, a plurality of devices, or a network. For more than one device, parallel or sequential division of processing may be used. Different devices making up the image processor 410 may perform different functions. In one embodiment, the image processor 410 is a control processor or other processor of a medical diagnostic imaging system, such as the medical scanner 400. The image processor 410 operates pursuant to stored instructions, hardware, and/or firmware to perform various acts described herein, such as identifying, detecting, inputting, outputting, and image generation.

The image processor 410 is configured to detect the edge by application of the scan data and the metadata to the machine-learned model 422. The machine-learned model 422 outputs the edge in response to the input of the scan data and the metadata.

The machine-learned model 422 is a neural network, support vector machine, or other machine-learning-based model. The machine-learned model 422 includes input channels for metadata and scan data. In one approach, mixed blocks are used. The metadata and scan data features propagate through the layers of the model 422 in parallel. Features from the metadata path may be provided to the scan data path, and vice versa.

In another approach for generalization, the machine-learned model 422 includes a hypernetwork or controller and a neural network (e.g., a convolutional neural network). The hypernetwork has an input for the metadata and an output to condition the neural network. The output conditions or configures the neural network. The hypernetwork uses the metadata to alter the neural network to best detect edges for the given scan conditions or settings. The neural network has an input for the scan data or features derived from the scan data and an output for features derived from the scan data or input features. Based on the conditioning by the hypernetwork, the neural network generates scan data features for output from the input scan data features.

For example, the neural network is a dynamic convolution network with a kernel bank. The hypernetwork is configured to generate a weight or weights for forming a kernel from the kernel bank. The dynamic convolution network is configured to convolve the scan data or the features derived from the scan data with the kernel. A series of such dynamic convolution arrangements may be provided in an encoder-decoder, transformer, U-Net, or image-to-image network, such as the arrangement being used in each of multiple of the layers.

In another approach, the machine-learned model 422 is a controller and a neural network (e.g., convolutional neural network). The controller is configured to provide different weights to different parts of the neural network. The different weights are based on the metadata to condition the neural network. The weights may be for scaling, attention, kernel creation, and/or other operation of the neural network. The neural network is configured to convolve the scan data or features derived from the scan data in layers. Different layers receive the different weights in parallel or separately to configure (condition) the neural network.

The display 430 is a CRT, LCD, projector, plasma, printer, tablet, smart phone or other now known or later developed display device. The display 430 displays an image responsive to the detected edge. An image of the edge, or an image of tissue enhanced based on image processing using the edge, is displayed. The image is displayed as part of, with, or separately from other medical images for the patient. The display 430 displays images for diagnosis, prognosis, and/or treatment planning. Due to the use of metadata and corresponding conditioning in the machine-learned model 422, the images may assist in diagnosis, prognosis, and/or treatment planning across a variety of scan settings and/or scanners.

The instructions, ground truths, training data, metadata, image (scan) data, machine-learned model 422, outputs, inputs, edge map, and/or other information are stored in a non-transitory computer readable memory, such as the memory 420. The memory 420 is an external storage device, RAM, ROM, database, and/or a local memory (e.g., solid state drive or hard drive). The same or different non-transitory computer readable media may be used for the instructions and other data. The memory 420 may be implemented using a database management system (DBMS) and residing on a memory, such as a hard disk, RAM, or removable media. Alternatively, the memory 420 is internal to the processor 410 (e.g., cache).

The instructions for implementing the processes, methods, and/or techniques discussed herein are provided on non-transitory computer-readable storage media or memories, such as a cache, buffer, RAM, removable media, hard drive, or other computer readable storage media (e.g., the memory 420). Computer readable storage media include various types of volatile and nonvolatile storage media. The functions, acts or tasks illustrated in the figures or described herein are executed in response to one or more sets of instructions stored in or on computer readable storage media. The functions, acts or tasks are independent of the particular type of instructions set, storage media, processor or processing strategy and may be performed by software, hardware, integrated circuits, firmware, micro code and the like, operating alone or in combination.

In one embodiment, the instructions are stored on a removable media device for reading by local or remote systems. In other embodiments, the instructions are stored in a remote location for transfer through a computer network. In yet other embodiments, the instructions are stored within a given computer, CPU, GPU or system. Because some of the constituent system components and method steps depicted in the accompanying figures may be implemented in software, the actual connections between the system components (or the process steps) may differ depending upon the manner in which the present embodiments are programmed.

Listed below are various Illustrative Embodiments. The Illustrative Embodiments summarize different combinations of aspects. Other combinations of any of the aspects with any other one or more of the aspects may be provided. Aspects from one type (e.g., method or system) may be used in another type (system or method).

Illustrative Embodiment 1. A method for edge detection by a medical imager, the method comprising: identifying metadata for imaging data representing a patient; detecting an edge represented in the imaging data with a machine-learned network, the machine-learned network outputting the edge in response to input of the metadata and the imaging data, the machine-learned network comprising a hypernetwork and a neural network, the hypernetwork configured to encode the metadata for altering operation of the neural network; and outputting an image representing the edge.

Illustrative Embodiment 2. The method of Illustrative Embodiment 1, wherein outputting comprises displaying the image representing the edge.

Illustrative Embodiment 3. The method of any of Illustrative Embodiments 1-2, wherein the imaging data comprises computed tomography data, and wherein identifying the metadata comprises identifying dose, resolution, and reconstruction kernel.

Illustrative Embodiment 4. The method of any of Illustrative Embodiments 1-3, wherein identifying the metadata comprises identifying a setting for acquisition of the imaging data and/or a setting for reconstruction of the imaging data.

Illustrative Embodiment 5. The method of any of Illustrative Embodiments 1-4, wherein detecting comprises detecting with the neural network comprising a convolutional neural network configured to receive the imaging data at an input and output the edge, wherein the hypernetwork encodes the metadata for conditioning the neural network.

Illustrative Embodiment 6. The method of any of Illustrative Embodiments 1-5, wherein detecting comprises detecting with the neural network configured to receive an attention map, feature scaling, and/or kernel creation information from the hypernetwork.

Illustrative Embodiment 7. The method of any of Illustrative Embodiments 1-6, wherein detecting comprises detecting with the neural network comprises a dynamic convolution network, and wherein the hypernetwork is configured to generate a weight based on input of the metadata, the weight used by the dynamic convolution network to form a kernel for convolution.

Illustrative Embodiment 8. The method of any of Illustrative Embodiments 1-7, wherein the hypernetwork is configured to provide values to different layers of the neural network in parallel.

Illustrative Embodiment 9. The method of Illustrative Embodiment 8, wherein the different values comprise unique values to each of the different layers.

Illustrative Embodiment 10. A method for edge detection by a medical imager, the method comprising: inputting both metadata and image data to a machine-learned network, the machine-learned network comprising a first part operating on the image data and a second part operating on the metadata, the second part configured to condition the first part; and outputting the edge by the machine-learned network in response to the input of both the metadata and image data.

Illustrative Embodiment 11. The method of Illustrative Embodiment 10, further comprising displaying an image of the edge or formed using the edge.

Illustrative Embodiment 12. The method of any of Illustrative Embodiments 10-11, further comprising enhancing an image with the edge and displaying the image.

Illustrative Embodiment 13. The method of any of Illustrative Embodiments 10-12, wherein inputting the metadata comprises inputting an acquisition setting and/or a reconstruction setting, wherein the second part of the machine-learned network generates an attention map, scale, and/or kernel configuration value used by the first part to operate on the image data.

Illustrative Embodiment 14. The method of Illustrative Embodiment 13, wherein the first part comprises a dynamic convolution network, wherein the second part generates the kernel configuration value as a weight and the first part forms a kernel using the weight and convolves the kernel with the image data or features derived from the image data.

Illustrative Embodiment 15. The method of any of Illustrative Embodiments 10-14, wherein the second part outputs different values to different layers of the first part.

Illustrative Embodiment 16. The method of any of Illustrative Embodiments 10-15, wherein inputting the metadata comprises inputting dose, resolution, and reconstruction values, wherein inputting the image data comprises inputting computed tomography data, and wherein outputting the edge comprises outputting an edge map.

Illustrative Embodiment 17. A system for edge detection, the system comprising: a medical scanner configured to scan a patient, the scan providing scan data and metadata, the metadata representing the scan and the scan data representing the patient; an image processor configured to detect the edge by application of the scan data and the metadata to a machine-learned model, the machine-learned model outputting the edge; and a display configured to display an image responsive to the edge.

Illustrative Embodiment 18. The system of Illustrative Embodiment 17, wherein the machine-learned model comprises a hypernetwork and a convolutional neural network, the hypernetwork having an input for the metadata and an output to condition the convolutional neural network, the convolutional neural network having an input for the scan data or first features derived from the scan data and an output for second features derived from the scan data.

Illustrative Embodiment 19. The system of Illustrative Embodiment 18, wherein the convolutional neural network comprises a dynamic convolution network with a kernel bank, wherein the hypernetwork is configured to generate a weight for forming a kernel from the kernel bank, and wherein the dynamic convolution network is configured to convolve the scan data or the first features derived from the scan data with the kernel.

Illustrative Embodiment 20. The system of any of Illustrative Embodiments 17-19, wherein the machine-learned model comprises a controller and a convolutional neural network, the controller configured to provide different weights to different parts, the different weights based on the metadata, the convolutional neural network configured to convolve the scan data or features derived from the scan data in layers, different layers receiving the different weights.

Various improvements described herein may be used together or separately. Although illustrative embodiments of the present invention have been described herein with reference to the accompanying drawings, it is to be understood that the invention is not limited to those precise embodiments, and that various other changes and modifications may be affected therein by one skilled in the art without departing from the scope or spirit of the invention.

## Claims

1. A method for edge detection by a medical imager, the method comprising:
identifying metadata for imaging data representing a patient;
detecting an edge represented in the imaging data with a machine-learned network, the machine-learned network outputting the edge in response to input of the metadata and the imaging data, the machine-learned network comprising a hypernetwork and a neural network, the hypernetwork configured to encode the metadata for altering operation of the neural network; and
outputting an image representing the edge.

2. The method of claim 1, wherein outputting comprises displaying the image representing the edge.

3. The method of claim 1 or 2, wherein the imaging data comprises computed tomography data, and wherein identifying the metadata comprises identifying dose, resolution, and reconstruction kernel.

4. The method of any one of claims 1 - 3, wherein identifying the metadata comprises identifying a setting for acquisition of the imaging data and/or a setting for reconstruction of the imaging data.

5. The method of any one of claims 1 - 4, wherein detecting comprises detecting with the neural network comprising a convolutional neural network configured to receive the imaging data at an input and output the edge, wherein the hypernetwork encodes the metadata for conditioning the neural network.

6. The method of any one of claims 1 - 5, wherein detecting comprises detecting with the neural network configured to receive an attention map, feature scaling, and/or kernel creation information from the hypernetwork.

7. The method of any one of claims 1 - 6, wherein detecting comprises detecting with the neural network comprises a dynamic convolution network, and wherein the hypernetwork is configured to generate a weight based on input of the metadata, the weight used by the dynamic convolution network to form a kernel for convolution.

8. The method of any one of claims 1 - 7, wherein the hypernetwork is configured to provide values to different layers of the neural network in parallel.

9. The method of claim 8, wherein the different values comprise unique values to each of the different layers.

10. A method for edge detection by a medical imager, the method comprising:
inputting both metadata and image data to a machine-learned network, the machine-learned network comprising a first part operating on the image data and a second part operating on the metadata, the second part configured to condition the first part; and
outputting the edge by the machine-learned network in response to the input of both the metadata and image data.

11. The method of any one of claims 1 - 10, further comprising displaying an image of the edge or formed using the edge.

12. The method of any one of claims 1 - 11, further comprising enhancing an image with the edge and displaying the image.

13. The method of any one of claims 10 - 12, wherein inputting the metadata comprises inputting an acquisition setting and/or a reconstruction setting, wherein the second part of the machine-learned network generates an attention map, scale, and/or kernel configuration value used by the first part to operate on the image data.

14. The method of claim 13, wherein the first part comprises a dynamic convolution network, wherein the second part generates the kernel configuration value as a weight and the first part forms a kernel using the weight and convolves the kernel with the image data or features derived from the image data.

15. The method of any one of claims 10 - 14, wherein the second part outputs different values to different layers of the first part.

16. The method of any one of claims 10 - 15, wherein inputting the metadata comprises inputting dose, resolution, and reconstruction values, wherein inputting the image data comprises inputting computed tomography data, and wherein outputting the edge comprises outputting an edge map.

17. A system for edge detection, the system comprising:
a medical scanner configured to scan a patient, the scan providing scan data and metadata, the metadata representing the scan and the scan data representing the patient;
an image processor configured to detect the edge by application of the scan data and the metadata to a machine-learned model, the machine-learned model configured to output the edge; and
a display configured to display an image responsive to the edge.

18. The system of claim 17, wherein the machine-learned model comprises a hypernetwork and a convolutional neural network, the hypernetwork having an input for the metadata and an output to condition the convolutional neural network, the convolutional neural network having an input for the scan data or first features derived from the scan data and an output for second features derived from the scan data.

19. The system of claim 18, wherein the convolutional neural network comprises a dynamic convolution network with a kernel bank, wherein the hypernetwork is configured to generate a weight for forming a kernel from the kernel bank, and wherein the dynamic convolution network is configured to convolve the scan data or the first features derived from the scan data with the kernel.

20. The system of any one of claims 17 - 19, wherein the machine-learned model comprises a controller and a convolutional neural network, the controller configured to provide different weights to different parts, the different weights based on the metadata, the convolutional neural network configured to convolve the scan data or features derived from the scan data in layers, different layers receiving the different weights.
